# EUROPEAN PATENT APPLICATION

(11) **EP 4 786 151 A1**
(43) Date of publication of application: **05.08.2026**
(21) Application number: 25155295.6
(22) Date of filing: 31.01.2025
(51) Int. Cl.: B29C 65/08, B29C 65/00, B29L 31/30

(54) **SYSTEM AND METHOD FOR ULTRASONIC WELDING**

(71) Applicant: AIRBUS Operations GmbH, 21129 Hamburg (DE)
(72) Inventor: Meyer, Tobias, 21129 Hamburg (DE); Prakash, Bhanu, 21129 Hamburg (DE)
(74) Representative: Airbus Germany

(57) **Abstract**

In order to allow an improved weld joint to be manufactured, the invention proposes a system (10, 10', 10") for ultrasonic welding which comprises a sonotrode (11) for emitting ultrasonic energy into a joint region (12) between a first part (13) and a second part (14) that are to be joined together. A consolidator (15; 15') exerts pressure on a surface (16; 17) of one of the first and second parts (13; 14) to consolidate the joint region (12). The consolidator (15, 15') is conformable to the surface (16; 17) of the one of the first and second parts (13; 14) to consolidate the joint region (12).

## Description

The invention relates to a system and method for ultrasonic welding. The system and method may be used to produce a welded joint between two or more parts. This method may be applied to components of a vehicle, for example an aircraft, for example for joining components such as a skin of the aircraft with one or more structural parts such as a stringer, shell or clip of an aircraft fuselage.

Welding describes a process in which two or more parts are joined by melting the base material of the parts and causing fusion of the base material between the parts. Energy is supplied to the interface region between the parts in order to melt the base material in the vicinity of the interface region. In ultrasonic welding, energy in the form of ultrasonic waves is used and is supplied by a sonotrode.

Ultrasonic welding can be used to weld thermoplastic components including composites. US 4 618 516 A discloses a method of joining two thermoplastic components by ultrasonic energy along respective confronting surfaces in which one component surface is provided with an energy director and the other surface is provided with a rough textured surface. A compressive force between the workpieces is applied and then ultrasonic energy is applied to the workpieces by means of an ultrasonic horn, also known as a sonotrode. The dissipation of ultrasonic energy in the thermoplastic components creates molten thermoplastic material at the interface between the workpieces. After a predetermined time interval, the ultrasonic energy is removed which causes the molten thermoplastic material to solidify and thereby provide a fusion joint between the workpieces.

An energy director may be used to concentrate the energy in the welding area and lead to reduction of the amount of energy required to soften and melt the thermoplastic material and to increase the strength of the joint or weld. In US 4 618 516 A, the energy director is formed by projections, for example pyramids, or ridges which are formed in the base material of one of the workpieces and project from the surface of one workpiece and contact the rough surface of the other component.

It is the object of the invention to supply a better consolidation onto the material. extend the range of applications in which ultrasonic welding can be used.

The object is achieved by the subject-matter of the independent claims. Preferred embodiments are subject-matter of the dependent claims.

According to the invention, a system for ultrasonic welding is provided, the system comprising a sonotrode for emitting ultrasonic energy into a joint region between a first part and a second part that are to be joined together and a consolidator which exerts pressure on a surface of one of the first and second parts to consolidate the joint region. The consolidator is conformable to the surface of the one of the first and second parts to consolidate the joint region.

Conformable means that the lower surface of the consolidator is able to conform to and map the surface so that all angles between intersecting curves of the path of the lower surface of the consolidator remain substantially unchanged in relation to the path of the surface of the one of the first and second parts. Thus, the consolidator is able to move along the surface of the one of the first and second parts such that the area of overlap between the lower surface of the consolidator and the surface remains as uniform as possible. The pressure applied to the surface and joint region by the consolidator is more uniform so that a reliable welded or fusion joint is produced.

In some embodiments, gas is used as a pressure media. In these embodiments, the solid parts of the consolidator are only in limited contact to the workpiece, i.e. the surface of one of the first and second parts, or may not be in contact with the surface of the first and second parts.

In an embodiment, the consolidator is not in physical contact with the surface of one of the first and second parts to consolidate the joint region but is spaced apart from that surface. The consolidator is arranged in close proximity to the surface, e.g. less than a 1 mm apart from the surface. The pressure on the surface is exerted by non-contact means, such as a high-pressure gas zone, e.g. an air cushion, which is formed between the consolidator and the surface.

In another embodiment, the consolidator is not in physical contact with the surface of one of the first and second parts to consolidate the joint region and is spaced apart from that surface. The pressure is exerted by non-contact means in the form of a gas stream or air stream which is directed at and impinges on the surface to exert pressure on the surface.

In an embodiment, the consolidator is brought into contact with the surface of one of the first and second parts to consolidate the joint region and exerts pressure on the surface of one of the first and second parts to consolidate the joint region.

By using these methods, a better consolidation is supplied onto the material before, during and after ultrasonic welding, while limiting physical contact to the workpiece. Improved consolidation of the joint region may also have the effect of extending the range of applications in which ultrasonic welding can be used.

The first and second parts are arranged in a stack with a joint region formed between them and provide an assembly. In some embodiments, the first part is in contact with the second part so that the joint region comprises an interface between the first and second part. In some embodiments, an energy director is located between the first and second parts so that the joint region comprises the interface between the first part and the energy director and the interface between the energy director and the second part. The energy director may have the form of a mesh or sheet. After the stack of first part, energy director, second part has been ultrasonically welded, a resin rich region remains at the interface between the first and second parts.

In some embodiments, the consolidator is brought into contact with the outer surface of either the first part or the second part. In other embodiments, the consolidator is brought into the proximity of the outer surface of either the first part or the second part so that it is positioned slightly above and spaced apart from this outer surface of either the first part or the second part.

The sonotrode and the consolidator are typically arranged adjacent to the same side of the assembly of the first and second parts so that the ultrasonic energy is directed into the surface which is contacted by the consolidator. The system and the assembly are typically moved relative to one another so that the ultrasonic energy is first emitted into a predetermined region of the joint region, where a welded joint is to be formed, this joint region melts to form a molten region. Afterwards, the consolidator is brought into contact with the surface of the assembly above or below the molten region so as to consolidate the molten region as it cools and before it solidifies to form the fusion (welded) joint between the first and second part. The sonotrode and the consolidator are arranged adjacent to one another such that the sonotrode first heats up the joint region by transmitting vibrational energy and then the consolidator applies pressure on the joint until it cools to a certain temperature.

The system is particularly useful for subassemblies in which the surface profile of the one of the first and second parts is non-planar, since the consolidator is conformable to the non-planar surface. Thus, variations in the surface profile, e.g. inclined surfaces, such as ramps, curves, double curves such as peaks and valleys, are compensated so that the consolidator exerts pressure more uniformly on this non-planar surface. Preferably, the conformable consolidator enables a uniform pressure to be applied to the assembly at each region of the surface profile.

The system is useful for continuous welding in which the sonotrode and consolidator are continuously moved over the surface to form an elongated welded joint, also known as a welded seam, and is useful for continuous welding of non-planar parts.

The system is useful for forming welded joints between parts of a vehicle, such as an aircraft. For example, for joining a joggled stringer to a skin.

The consolidator may have different structures to enable it, or at least its lower surface, to conform to the surface of the one of the first and second parts. In an embodiment, the system comprises a source of gas, e.g. air. The gas may be pressurized.

In an embodiment, the consolidator directs the gas stream onto the surface of one of the first and second parts. This gas stream exerts a pressure on the surface which is used to consolidate the molten joint region. The gas stream is directed onto the surface of the one of the first and second parts so that the consolidating pressure provided by the gas stream of the consolidator as it impinges the surface is conformal with the surface.

In an embodiment, the system comprises a source of gas, e.g. air. The gas may be pressurized. The consolidator directs the gas stream into a cavity to form a high-pressure zone between the consolidator and the surface of one of the first and second parts. This high-pressure zone has a higher pressure than the ambient pressure outside of the cavity and forms a gas cushion above and at the surface which has a higher pressure than the ambient pressure outside of the cavity. This gas cushion exerts a pressure on the surface. This pressure on the surface is used to consolidate the molten joint region. The gas cushion, e.g. air cushion, of the consolidator is conformal with the surface and allows the consolidator to move over the surface in a conformal manner.

In an embodiment, the consolidator comprises a mount and a flexible, e.g. elastic, membrane connected to the mount. The flexible membrane laterally surrounds a cavity and has an open lower side that, in operation of the system, faces towards the surface of the one of the first and second parts. The mount comprises an inlet for directing the gas stream, e.g. pressurized gas, into the cavity to provide a gas cushion which exerts pressure onto the joint region. The flexible membrane directs the gas stream to the surface of one of the first and second parts to consolidate the joint region by exerting pressure on the surface in an area that is at least in part determined by the flexible membrane. For example, the flexible membrane may have a circular ring form and have a lower surface comprising a peripheral edge portion that laterally surrounds a circular opening through which the air is directed at the surface. The peripheral edge portion of the flexible membrane provides a section of the outer surface of the consolidator that is conformable to the surface of the one of the first and second parts. The flexible membrane can be referred to as a skirt.

In an alternative embodiment, the consolidator comprises a lower surface that is conformable to the surface of the one of the first and second parts in order to exert pressure on and consolidate the joint. For example, the consolidator may be formed of a flexible material. In another example, the consolidator may comprise a flexible outer skin and a flexible body. In an alternative embodiment, the consolidator may comprise a bundle of pins that are movable relative to one another so that, as the tips of the pins move over the non-planar surface, the individual pins can move to map the profile and contour of that surface.

In an embodiment, the sonotrode is supported by the mount and the flexible membrane laterally surrounds the sonotrode so that the sonotrode is located in the cavity of the consolidator.

In an embodiment, the consolidator including the flexible membrane is located laterally adjacent the sonotrode so that the sonotrode and consolidator can be applied sequentially to the surface of the one of the first and second parts.

In an embodiment, the system further comprises a driving system for driving the sonotrode and consolidator over the surface in a welding direction and the consolidator is positioned downstream of the sonotrode with respect to the welding direction. Thus, first the sonotrode and afterwards the consolidator is brought into contact with the surface of the one of the first and second parts. This system may be used to provide a welding system for continuous ultrasonic welding.

In an alternative embodiment, the system further comprises a driving system for driving the sonotrode and consolidator over the surface in a welding direction and the consolidator is located upstream and downstream of the sonotrode. This arrangement is provided for the embodiment in which the sonotrode is located in the cavity of the flexible membrane. In this embodiment, the portion of the consolidator that is located upstream of the sonotrode provides a pre-compressor for pre-compressing the joint before ultrasonic welding. The portion of the consolidator that is located downstream of the sonotrode provides consolidation of the molten region. This system may be used for continuous ultrasonic welding.

In an embodiment, the system further comprises a pre-compression device, e.g. a roller that is located upstream of the sonotrode. The roller is configured to exert pressure on the surface of the one of the first and second parts to pre-compress the joint before ultrasonic welding. In embodiments in which the sonotrode and consolidator are separate, the roller is located on the opposite side of the sonotrode to the consolidator. For example, the roller is located upstream of the sonotrode and the consolidator is located downstream of the sonotrode with respect to the welding direction.

In an embodiment, one or both of the first part and the second part comprise a thermoplastic polymer, for example a fibre-reinforced thermoplastic composite. Thermoplastic composites are useful for applications, such as aircraft, in which a high strength and low weight are desirable.

Ultrasonic welding of thermoplastic polymers, either in a pure condition or filled with the fibre reinforcement, is based on the principle that the kinetic energy of an acoustic wave of ultrasonic frequency propagating inside a part will partly dissipate as heat energy when this wave crosses the interface into an adjacent part. This heat will melt the thermoplastic polymer in regions close to the interface, causing the macromolecular diffusion of the matrix, that is the thermoplastic material, from both parts to form a welded joint between the components after cooling down.

The fibres of the fibre-reinforced thermoplastic composite may comprise at least one of the group consisting of glass fibres and carbon fibres. The thermoplastic may comprise at least one of the group consisting of PAEK (polyaryletherketones), PEKK (polyetherketoneketone), PEEK (polyetheretherketone), PEI (polyetherimide), PA (polyamide), PPS (polyphenylene sulfide), PB (polybutenes), PBC (polyester block copolymers), PV (polyvinyls) and PC (polycarbonates).

In some embodiments, an energy director is arranged between the first and second part. In this embodiment, the joint region, into which the ultrasonic energy or ultrasonic waves is emitted and which melts, comprises a portion of the first part, the energy director and a portion of the second part. A fusion or welded joint is formed between the base materials of the first and second parts and the energy director.

The energy director is used to concentrate the energy in the welding area and lead to reduction of the amount of energy required to soften and melt the thermoplastic material and to increase the strength of the joint or weld. In some embodiments, the energy director has the form of a filler sheet or a mesh. The energy director may comprise a polymer that is the same as the polymer of the first and second parts or which is compatible with the material of the first and second parts so that ultrasonic welding results in intermolecular diffusion between the energy director and the first and second parts.

The filler sheet may comprise a thermoplastic material. , e.g. thermoplastic material of the filler sheet may have a melting temperature of at least 120°C. The filler sheet may be free of fibres or other filling materials and may consist of thermoplastic material only. Alternatively, the filler sheet may include a filler such as fibres in addition to the thermoplastic material. The fibres may be carbon fibres, glass fibres, ceramic or metallic fibres. Continuous, long or short fibres may be used. The filler sheet may comprise various types of thermoplastic material, including PAEK (polyaryletherketones), PEKK (polyetherketoneketone), PEEK (polyetheretherketone), PEI (polyetherimide), PA (polyamide), PPS (polyphenylene sulfide), PB (polybutenes), PBC (polyester block copolymers), PV (polyvinyls) and PC (polycarbonates).

In some embodiments, the filler sheet providing the energy director is a planar continuous sheet. In some embodiments, the filler sheet comprises holes or perforations. In some embodiments, the filler sheet is structurally integral and self-supporting and formed ex-situ. This type of sheet is easy to handle. In some embodiments, the material of the filler is applied to the area to be joined, for example in a liquid form and the sheet is formed in-situ on the first surface of the component.

In an embodiment, the first part is a skin of an aircraft and the second part comprises one of the group consisting of a stringer, an omega stringer, a joggled stringer, and a cryogenic tank, of an aircraft. In an alternative embodiment, the second part is a skin of an aircraft and the first part comprises one of the group consisting of a stringer, an omega stringer, a joggled stringer, and a cryogenic tank, of an aircraft.

According to another aspect of the invention, a method of ultrasonic welding is provided. The method comprises forming an assembly to be ultrasonically welded by arranging a first part on a second part and forming a joint region therebetween, emitting ultrasonic energy into the joint region between the first part and the second part and forming a molten region at the joint region and bringing a consolidator into contact with a surface of the assembly to exert pressure on and consolidate the joint region. The consolidator is conformable to the surface profile of the one of the first and second parts to consolidate the joint region.

Energy in the form of ultrasonic waves is supplied to the interface or joint region between the parts in order to melt the base material of the first and second parts in the vicinity of the interface or joint region. After a predetermined time interval, the ultrasonic energy is removed which causes the molten material to solidify and thereby provide a fusion joint between the parts at the joint region. The consolidator is used to apply pressure to the molten material to remove voids and consolidate the joint region. The ultrasonic energy may be supplied by a sonotrode.

In some embodiments, the surface profile or contour of the assembly is non-planar. For example, the surface profile may comprise a ramp, a curve, or a double curve. The conformability of the consolidator to the surface of the assembly enables the consolidator to exert a more uniform pressure onto the non-planar surface profile of the assembly and onto the joint region.

In an embodiment, the ultrasonic energy is supplied by a sonotrode and the method comprises driving the sonotrode and the consolidator over the assembly in a welding direction to continuously form an elongated welded joint by sequentially applying the sonotrode and consolidator along the desired position of the welded joint. The consolidator is located downstream of the sonotrode with respect to the welding direction.

Alternatively, the consolidator may be located upstream and downstream of the sonotrode with respect to the welding direction. The portion of the consolidator located upstream of the sonotrode with respect to the welding direction may be used to pre-compress the joint prior to melting of the joint by the sonotrode. The portion of the consolidator downstream in the welding direction of the sonotrode is used to consolidate, i.e. exert pressure on the molten region, removing voids. After solidification of the molten region, a welded joint with a good reliability is formed.

In the welding direction, the distance between the surface of the assembly and the consolidator varies due to the non-planar surface profile. The conformability of the consolidator to the surface of the assembly enables the consolidator to compensate for the variation in the surface profile and exert a more uniform pressure onto the surface profile of the assembly and on the molten joint region.

The consolidator may have different structures for providing the conformability with the surface of the assembly. In an embodiment, the consolidator is coupled to a source of gas, e.g. air, which may be pressurized and directs the gas stream at the surface of the assembly, exerting pressure on and consolidating the joint.

In an embodiment, the consolidator comprises a mount and a flexible membrane connected to the mount and laterally surrounding a cavity, wherein the flexible membrane has an open lower side that faces towards the surface of the one of the first and second parts, wherein the mount comprises an inlet for directing the gas stream into the cavity and the flexible membrane directs the gas stream to the surface of the assembly to consolidate the joint region.

In an embodiment, the consolidator is coupled to a source of gas and the consolidator comprises a mount and a flexible membrane that is connected to the mount and laterally surrounds a cavity. The flexible membrane has an open lower side that faces towards the surface of the one of the first and second parts. The mount comprises an inlet for directing the source of gas into the cavity. The consolidator is brought into proximity with, and is spaced apart from, the surface of the assembly. Gas is directed into the cavity to form a high-pressure gas zone between the consolidator and the surface of the assembly. The high-pressure zone exerts the pressure on the surface of the assembly to consolidate the joint region. In an embodiment, at least a portion portion of the consolidator is brought into contact with the surface. For example, the flexible membrane may come into contact with the surface as the consolidator moves over the surface. The flexible membrane is able to conform to the surface, as it is flexible.

In an embodiment, the consolidator comprises an outer surface that is conformable to the surface of the assembly, i.e. the surface of one of the first and second parts to consolidate the joint region.

In an embodiment, the consolidator comprises a bundle of pins that are movable relative to one another and the pins are brought into contact with and exert pressure on the surface of one of the first and second parts to consolidate the joint region.

If a flexible membrane is provided, a lower surface of the flexible membrane is conformable to the surface of the assembly, i.e. one of the first and second parts. In other embodiments the consolidator is formed of a flexible material.

In an embodiment, the method further comprises bringing a roller that is located upstream of the sonotrode into contact with the surface of assembly in order to exert pressure on and to pre-compress the joint region. Then the sonotrode is applied to the joint region to form the molten joint region and then the consolidator is used to apply pressure to the molten region to remove voids and consolidate the joint region. This method may be used in continuously ultrasonic welding to form an elongated continuous welded joint.

In an embodiment, the method further comprises arranging an energy director between the first and second part. For example, the energy director may be placed on the second part in the predetermined region of overlap with the first part and then the first part is arranged on the energy director, forming a stack with the energy director at the joint between the first and second part.

The method of ultrasonic welding may be used to join parts or components of an aircraft or aircraft subassembly. In an embodiment, the first part is a skin of an aircraft and the second part comprises one of the group consisting of a stringer, an omega stringer, a joggled stringer, and a cryogenic tank, of an aircraft. Alternatively, the second part is a skin of an aircraft and the first part comprises one of the group consisting of a stringer, an omega stringer, a joggled stringer, and a cryogenic tank, of an aircraft.

In an example , ultrasonic waves having a frequency in the range of 20 kHz to 60 kHz and with an amplitude in the range of 10 µm to 200 µm are supplied to the loose assembly of the first and second parts by a sonotrode for a predetermined time interval, for example for a few seconds during which the energy director, if present, and regions of the first and second parts adjacent the joint region between them melt causing fusing of the base material. The sonotrode is then switched off, or moved away allowing the components and the joint formed by the fusing of the base material of the first and second parts to cool down and solidify, thus creating a welded joint between the first and second component. The consolidator is applied to the assembly during this cooling process so as to exert pressure on the molten region, and reduce any voids present, thus improving the welded joint.

The methods described herein may be also be used to join more than two components to form the assembly. Welding is a local joining method so that in embodiments in which the assembly includes more than two components, each welded joint is formed sequentially, for example by repeating the method or repeating the welding process.

In some embodiments, the first part and/or the second part comprises a plastic material such as a thermoplastic or a thermoset material with a thermoplastic layer at the surface which is to be joined. In some embodiments, the first part and/or the second part comprise a composite material. The composite material may comprise a reinforced material, such as fibres or particles and a matrix formed by the thermoplastic material. For example, the composite may be a fibre reinforced composite material in which the thermoplastic provides the matrix. The fibres may be graphite, graphene, carbon fibres, glass or ceramic fibres or particles. Also, biological sourced fibres could be applied. Continuous, long or short fibres may be used. In some embodiments, the first and/or second part may be a laminate material. Also, fibres or particles after recycling, downcycling or reuse could be applied.

The thermoplastic material of the first part and/or the second part may have a melting temperature of at least 120°C. The thermoplastic material of the first component and/or second component may be PAEK, PEKK, PEEK, PEI, PA, PPS, PB, PBC, PV and PC. Also, other matrix materials are suitable, like bio-sourced matrix.

In some embodiments, the energy director has the form of a filler sheet that comprises the same thermoplastic material as the first component and/or the second component. This is useful as the thermoplastic material of the filler sheet and first component and/or second component melts at the same temperature and enables good macromolecular diffusion between the filler sheet and first component and/or second component. This is useful for providing a high weld quality since fusion is promoted.

Welding of thermoplastic composite structures is an attractive alternative to the conventional mechanical fastening, eliminating the need of drilling holes into composites and cutting down the weight added by the fasteners. Ultrasonic welding is fast, energy efficient and can create high strength joints. The ultrasonic welding system described herein reduces system complexity and increases system versatility. It can be used to weld 3D geometries such as double curved and joggled stringers to skin for aircraft, and leak-tight joints for hydrogen tank systems made of thermoplastic CFRP materials, for example.

The system described herein may be used for welding longer seams in a continuous ultrasonic welding process, in which the vibrating sonotrode and consolidator continuously move along the overlap/joining area. At any instance during the process, the overlap behind the sonotrode is still molten and the material needs to be consolidated by the consolidator until the temperatures reach below its glass transition temperature and it solidifies to form the welded joint.

The advantages of the invention include conformal consolidation of non-planar surfaces without load peaks, low friction allowing better surface quality, less expensive positioning systems are required, a reduction in system complexity and an increase in systems versatility. In some designs, cooling of welded areas by air current is provided.

Embodiments will now be described with reference to the drawings in which:
Fig. 1 depicts a schematic view of a system for ultrasonic welding according to an embodiment;
Fig. 2 illustrates a schematic view of a system for ultrasonic welding according to an embodiment;
Fig. 3 illustrates a schematic view of a system for ultrasonic welding according to an embodiment;
Fig. 4A illustrates a schematic view of a comparison system and method for ultrasonic welding which is not part of the presently claimed invention;
Fig. 4B illustrates a schematic view of a system and a method for welding according to an embodiment;
Fig. 5A illustrates a schematic view of a cryogenic tank which may be fabricated using ultrasonic welding;
Fig. 5B illustrates a schematic cross-sectional view of the fabrication of a cryogenic tank using ultrasonic welding;
Fig. 5C illustrates a perspective view of a subassembly comprising a skin panel and a stringer which may be joined by ultrasonic welding;
Fig. 5D illustrates a cross-sectional view of Fig. 5C.
Fig. 6 illustrates an aircraft comprising one or more subassemblies including one or more welded joints fabricated using the system or method of ultrasonic welding according to any one of the embodiments described herein.

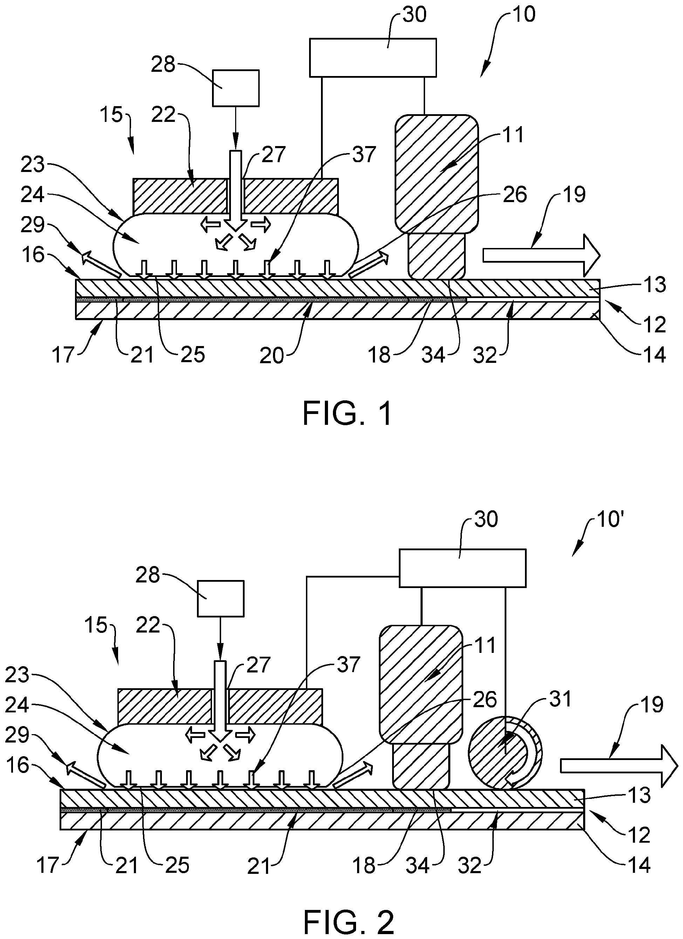

Fig. 1 illustrates a schematic view of a system 10 for ultrasonic welding according to an embodiment. The system 10 comprises a device 11 for emitting ultrasonic energy into a joint region 12 that is located between a first part or component 13 and a second part or component 14 which are to be welded together. The device 11 may be called a sonotrode. The system 10 also comprises a consolidator 15 exerts pressure on a surface of one of the first and second parts 13, 14 in order to consolidate the joint 12. The first part 13 is placed on the second part 14 in order to form the joint 12 between the first part 13 and the second part 14. The sonotrode 11 and consolidator 15 are positioned adjacent a side of the first part 13 or second part 14. In Fig. 1, the sonotrode 11 and the consolidator 15 are arranged adjacent to and are brought into close proximity to the outer surface 16 of the first part 13. The consolidator 15 exerts pressure on the outer surface 16 of the first part 13 but is not in contact with the outer surface 16 of the first part 13. For example, the spacing between the consolidator 15 and the surface 16 may be 1 mm or less. The consolidator 15 is conformable to the surface 16 of the first part 13 in order to consolidate joint. Conformable describes the ability of the consolidator 15 to follow and conform to the shape/profile of the surface 16. Alternatively, the consolidator 15 may exert pressure on the outer surface 17 of the second part 14.

The tip 34 of the sonotrode 11 is brought into contact with the surface 16 of the first part 13 and emits ultrasonic energy into the first part 13 and joint 12 in order to melt the materials of the first and second part 13, 14 and create a molten region 18.

The consolidator 15 is applied to and exerts pressure, as illustrated by the arrows 37 in Fig. 1, on the molten material 20 while it is cooling down in order to consolidate the joint region 12. Consolidation of the joint region 12 removes any voids which may have arisen during the arrangement of the first and second parts 13, 14 and/or melting by the sonotrode 11.

The system 10 may be used for continuous ultrasonic welding. The sonotrode 11 and the consolidator 15 are coupled to and driven by driving means 30 and moved by the driving means in a welding direction, indicated by the arrow 19, along the desired position of the welded joint, which may be elongated. As the sonotrode 11 moves in the welding direction 19 underlying region is melted to form a molten region 18. The consolidator 15 is positioned downstream of the sonotrode 11 with respect to the welding direction 19 and is positioned above molten material 20 which, since the it is no longer subjected to ultrasonic energy as the sonotrode 11 has moved to the right, cools down and then solidifies to form the ultrasonically welded joint 21.

One or both of the first and second parts 13, 14 may be formed of fibre-reinforced thermoplastic composite, for example a carbon fibre reinforced composite with a thermoplastic matrix.

In some embodiments, an energy director 32 is positioned between the first part 13 a second part 14. The energy director 32 may be used to concentrate the energy in the welding area and reduce the amount of energy required to soften and melt the thermoplastic material of the first and second parts 13, 14. The energy director 32 may have the form of a thermoplastic filler sheet. The thermoplastic material of the filler sheet may have a melting temperature of at least 120°C. The filler sheet may be free of fibres or other filling materials and may consist of thermoplastic material only. Alternatively, the filler sheet may include a filler such as fibres in addition to the thermoplastic material. The fibres may be carbon fibres, glass fibres, ceramic or metallic fibres. Continuous, long or short fibres may be used.

The consolidator 15 is conformable to the surface 16 of the first part 13. In the embodiment illustrated in Fig. 1, the consolidator 15 comprises a mount 22 and a flexible membrane 23 which extends from the lower surface of the mount 22 and laterally surrounds a cavity 24. The membrane 23 has an opening 25 at its lower surface which may be laterally surrounded by a peripheral portion 26 of the membrane 23. The opening 25 faces towards the surface 16 onto which pressure is exerted. The flexible membrane 23 may be considered to be a skirt. The mount 22 includes a through opening 27 for directing a source 28 of pressurised gas, for example pressurised air, from the source 28 into the cavity 24. The cavity 24 provides a volume of pressurized gas.

The flexible membrane 23 directs the airflow from the source 28 through the opening 25 and into the cavity 24 where a high-pressure gas zone is formed that is located on the surface 16 of the first part 13. The pressure within the cavity 24 is higher than the ambient pressure. The high-pressure gas zone can be considered as a gas cushion, or an air cushion where the gas is air. This gas cushion creates a force and exerts pressure, as shown schematically by the arrows 37, on the surface 16 of the first part 13 and onto the molten material 20 formed at the joint region 12 between the first and second parts 13, 14 in order to consolidate the joint region12. In this embodiment, the pressure on the surface 16 is provided by an aerostatic pressure. Due to the formation of the gas cushion on the surface 16, the consolidator 15 is able to move over the surface 16 of the first part 13 and conform to the profile of the surface 16 without being in contact with the surface 16. The flexible membrane 23 may come into contact with the surface 16 as the consolidator moves over the surface 16. The flexible membrane 23 is able to conform to the surface 16, as it is flexible.

Air from the high-pressure zone formed in the cavity may escape, as indicated by the arrows 29, from around the edges of the opening 25 in the flexible membrane 23.

The consolidator 15 shown in Fig. 1 has the advantage that its lower portion provided by the flexible membrane 23 and the cavity 24 directing the pressurized gas onto the surface 16 of the first part 13 is not rigid. The consolidator 15 is able to move in a conformal way and follow any variations in the surface profile of the surface 16 of the parts to be joined.

In another embodiment, the pressure on the surface 16 is provided by a stream of the gas impinging on the surface 16 of the first part 13.

In a further non-illustrated embodiment, the consolidator 15 is brought into contact with and exerts pressure on a surface 16, 17 of one of the first and second parts 13, 14 in order to consolidate the joint 12. For example, the consolidator 15 may comprise a bundle of pins that are movable relative to one another. This enables the lower surface of the consolidator provided by the pins to be brough into contact with the surface 16, 17 and be conformable to that surface 16, 17 of the first or second part 13, 14.

In Fig. 1, the surface 16 of the first part 13 is depicted as planar. However, many components to be joined may have non-planar surfaces, for example have an inclined surface or the curved surface or have a double curved surface, such as a peak or valley. The flexible consolidator 15 can follow these surface profiles so as to be able to exert pressure on to the nonplanar surface in a more uniform way. Thus, a more uniform consolidation force is applied over the entire length of the molten region 20 which cools to form a more uniform welded joint 21.

An example sonotrode 11, which may be used in the system 10, comprises a pneumatic press, frequency converter, piezoelectric converter, booster and the sonotrode tip 11. The sonotrode tip 11 is brought into contact one of the parts which is to be welded, in the embodiment illustrated in Fig. 1, with the surface 16 of the first part 13. The sonotrode 11 exerts static pressure and high frequency (20 kHz) low amplitude (10 µm to 50 µm) transverse mechanical vibration on the components 13, 14. Heat is generated by a combination of fiction and viscoelastic heating. Ultrasonic energy is inserted into the component 13, the filler sheet 32 and the component 14, whereby the thermoplastic material of the filler sheet 32 and of the components 13, 14 in the region of the interface between the components 13, 14 melts to form molten region 18. Melting of the energy director 32 may be caused by higher cycling's strain due to lower stiffness of the energy direct vector compared to the fibre reinforced components 13, 14.

Fig. 2 illustrates a system 10' for ultrasonic welding according to another embodiment. The system 10' includes the sonotrode 11 and consolidator 15 as illustrated in Fig. 1. This embodiment, the system 10' further includes a pre-compression device in the form of a roller 31 which is positioned upstream of the sonotrode 11 with respect to the welding direction 19 and therefore on the opposing side of the sonotrode 11 from the consolidator 15. The roller 31 is brought into contact with and exerts pressure on the upper surface 16 of the first part 13 and serves to pre-compress the joint region 12 before the sonotrode 11 emits ultrasonic energy into the joint region 12. This pre-compression may be useful to form an increased contact area between the first and second parts 13, 14 or, in the case that the energy director 32 is used, an increased the contact area between the first part 13 and the energy director and between the energy director 32 and the second part 14.

The upstream roller 31 may also assist in hindering or preventing vibrations from the sonotrode 11 being transmitted into the parts upstream of the sonotrode 11, which further improves the quality and reliability of the welded joint 21. The upstream roller 31 may also assist in defining the lateral extent of the molten area created by the sonotrode 11 to further improve the quality and reliability of the welded joint 21.

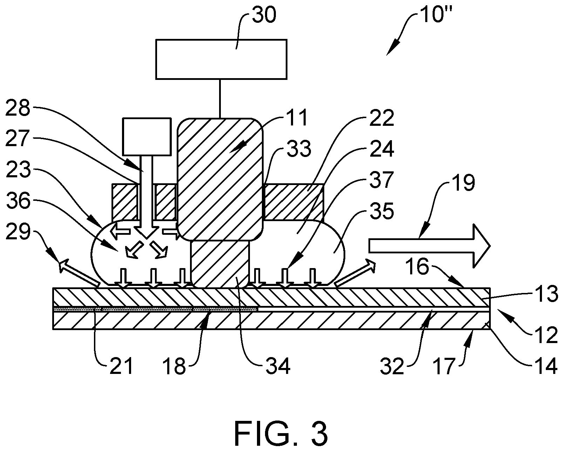

Fig. 3 illustrates a system 10" for ultrasonic welding according to another embodiment. The system 10" comprises a sonotrode 11 and a consolidator 15 with a flexible membrane 23 surrounding a cavity 24, but differs from the systems 10 and 10' of figures 1 and 2 in the arrangement of the sonotrode 11 with respect to the consolidator 15. In this embodiment, the mount 22 includes a further opening 33 in which the sonotrode 11 is mounted.

In another embodiment, the sonotrode 11 extends through mount 22 through a through hole 23 without a rigid connection to the mount 22 of the consolidator 15. The sonotrode 11 is mechanically decoupled from the consolidator 15 to avoid transferring consolidation forces into the sonotrode 11. The sonotrode 11 may be sealed against the mount 22, for example by an O-ring or another kind of seal.

The opening 27 in the mount 22 for the pressurised gas 28 is located downstream of the centre of the mount 22. The sonotrode 11 is mounted in approximately the centre of the mount 22. The sonotrode 11 is, therefore, located within the cavity 24 and is laterally surrounded by the flexible membrane 23. The tip 34 of the sonotrode 11 protrudes through the opening 25 in the lower surface of the consolidator 15. The pressurised air or gas is distributed throughout the ringshaped portion of the cavity which laterally surrounds the sonotrode 11.

The consolidator 15 exerts pressure on the joint region 12 upstream and downstream of the sonotrode 11. The consolidator 15 has a first portion 35 which is located upstream of the sonotrode 11 and, therefore, above the non-molten section of the joint region 12 between the first and second parts 13, 14. The consolidator 15 also includes a portion 36 which is located downstream of the sonotrode 11 and, therefore, above the molten material 20 which is cooling down.

The first portion 35 which is located upstream of the sonotrode 11, with respect to the welding direction 19, provides precompression of the joint 12, similar to the effect of the roller 31 shown in Fig. 2. The portion 36 of the consolidator 15 which is located downstream of the consolidator 11 with respect to the welding direction 19 provides consolidation of the molten material 20 and welded joint 21 that is formed after solidification of the molten material 20.

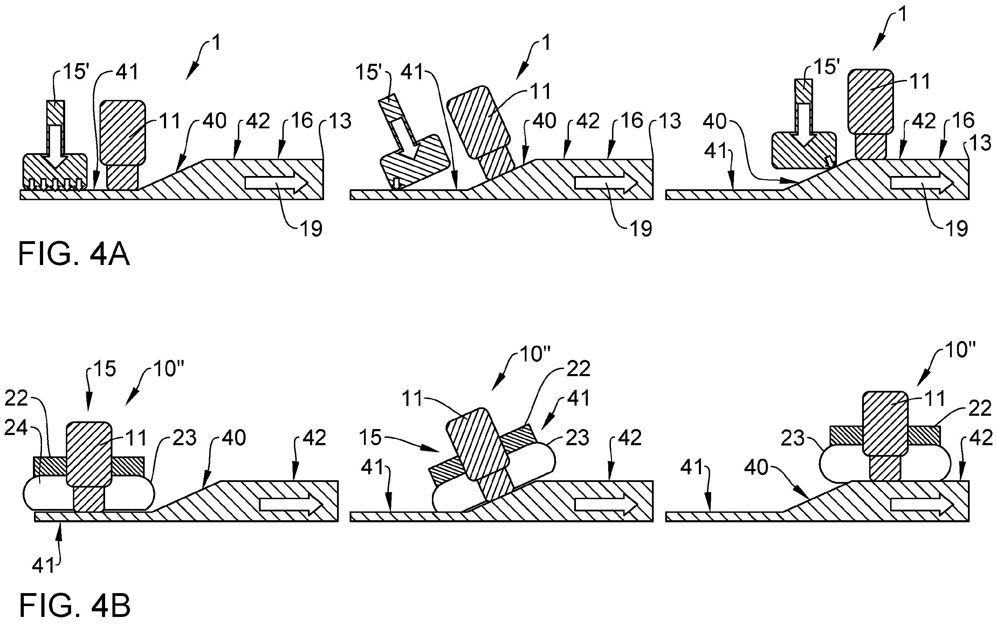

Fig. 4A illustrates a comparison system 1 and method of ultrasonic welding which is not part of the presently claimed invention. The comparison system 1 for ultrasonic welding comprises a sonotrode 11 and a consolidator 15' for exerting pressure on to the first surface 16 of the first part 13. The consolidator 15' is located downstream of the sonotrode 11 with respect to the welding direction 19. In this embodiment, the consolidator 15' is rigid. For example, the consolidator 15' may be formed of a metal, such as copper, and has a solid lower surface which is brought into contact with the surface 16 of the first part 13 in order to exert pressure on and consolidate the joint region 12.

Fig. 4A illustrates three stages of a method of ultrasonic welding in which the comparison system 1 is used to weld a surface 16 with a nonplanar surface profile which may include ramps, joggles or curvatures. The illustrated surface profile has a ramp 40 between a lower horizontal plateau 41 and an upper horizontal plateau 42. The sonotrode 11 is moved towards the right in the welding direction 19 along the lower plateau 41, up the inclined ramp 40 and then along the upper plateau 42. As can be seen in Fig. 4A, the lower surface of the solid consolidator 15' is not able to remain in contact with the surface 16 over its entire area as the consolidator 15' moves up the ramp 40 and along the upper plateau 42. Thus, the pressure applied to the surface 16 by the consolidator 15' varies so that the quality of the weld produced may vary. This consolidator 15' may heat up to very high temperatures when welding longer overlaps. This hot consolidator 15' then reduces the cooling rate of the welded area, thereby affecting the weld quality.

Fig. 4B illustrates three stages of a method of ultrasonic welding the surface 16 with a non-planar profile using the consolidator 15' illustrated in Fig. 3. The surface profile has a ramp 40 between a lower horizontal plateau 41 and an upper horizontal plateau 42. As the system 10" with the sonotrode 11 located within the consolidator 15 moves in the welding direction 19 and moves up the ramp 40, the lower surface of the consolidator 15, which is provided by the opening 25 which is laterally surrounded by the flexible membrane 23, is able to be located parallel to the inclined surface of the ramp 40, thus allowing the air cushion formed by the pressurised gas in the cavity 24 to be directed at the incline and provide a pressure on the ramp 40 which is similar to, or may be the same as, the pressure exerted on the lower plateau 41. Thus, the consolidator 15' moves at the same angles as the surface 16 and moves in a path that follows the surface profile so that the area of overlap and the pressure applied to the surface 16 is more uniform. As the consolidator 15' moves up the ramp 40 and onto the upper plateau 42, the flexible membrane 23 and cavity 24 is able to accommodate for the change in angle between the ramp 40 and the upper plateau 42 thus enabling air to be directed at the surface 16 throughout the movement of the system 10". This enables the consolidator 15' to provide a pressure on the first major surface 16 which is more similar throughout the length of the weld in the welding direction 19 despite the nonplanar profile of the surface 16.

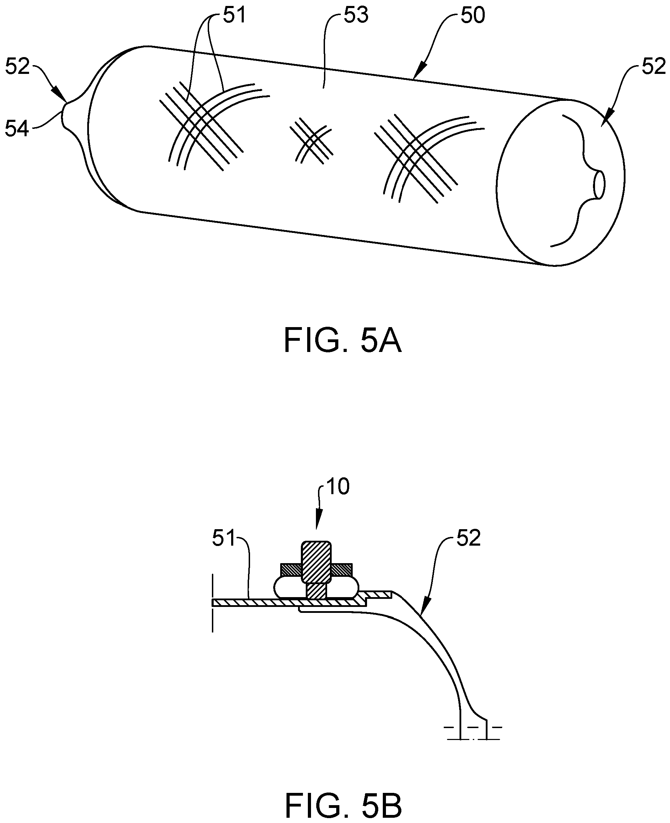

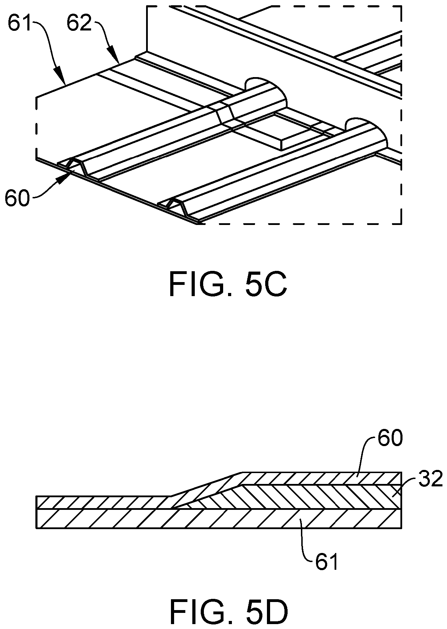

The system 10, 10', 10" for ultrasonic welding and the methods of ultrasonic welding described herein may be used to fabricate various objects and subassemblies. Since ultrasonic welding can be used to weld parts comprising thermoplastics and, in particular, fibre reinforced thermoplastic composite, the method may be used for forming components where a low weight and high strength is desirable. For example, the system or method may be used to fabricate components or subassemblies for aircraft. Fig. 5, which includes figures 5A to 5D, illustrates examples of components which may be fabricated using the systems and methods described herein.

Fig. 5A illustrates a cryogenic tank 50 which may be used for storing liquid hydrogen for use as fuel for propelling a vehicle such as an aircraft. The cryogenic storage tank 50 typically has end pieces 52 and a substantially cylindrical body 53 and includes openings 54 for allowing the tank 50 to be filled with hydrogen as well as to supply the stored liquid hydrogen to the engine. The hollow body 53 is formed of a fibre reinforced polymer-based composite.

Fig. 5B illustrates a cross-sectional view of the use of the system 10" depicted in Fig. 3 to join a fibre reinforced thermoplastic layer 51 to a prefabricated metal end piece 52 of the cryogenic tank 50. The systems 10, 10' shown in figures 1 and 2 may also be used. The outer surface of the fibre-reinforced layer 51 has a non-planar shape as it is adapted to the non-planar flange of the end piece 52. A hybrid joint is provided between each end of the hollow body 53 and its respective metallic end piece 52 to attach the metallic end piece 52 to the fibre-reinforced polymer-based composite 51 of the wall of the hollow body 53. In some embodiments, the fibre-reinforced polymer-based composite is a carbon fibre reinforced polymer composite (CFRP) or a fibre reinforced thermoplastic composite. The thermoplastic material may have a melting temperature of at least 200°C or at least 220°C. The fibres may be carbon fibres, glass fibres or ceramic fibres. Continuous, long or short fibres may be used. The thermoplastic material may be PAEK (polyaryletherketones), PEKK (polyetherketoneketone), PEEK (polyetheretherketone), PEI (polyetherimide), PA (polyamide), PPS (polyphenylene sulfide), PB (polybutenes), PBC (polyester block copolymers), PV (polyvinyls) and PC (polycarbonates).

Fig. 5C illustrates an embodiment in which a stringer 60 is to be attached to a skin panel 61 of an aircraft. In this embodiment, a joggle 62 is used. Fig. 5D illustrates a cross-sectional view of the skin panel 60, energy deflector 63 and joggle 62. Stringers run lengthwise (longitudinally) along an airplane's fuselage or span wise of a wing. Their purpose is to serve as structural components that transfer loads and stresses from the aircraft's skin to the formers. The stringer 60 may be connected to the skin 61 by ultrasonic welding using the system 10, 10', 10".

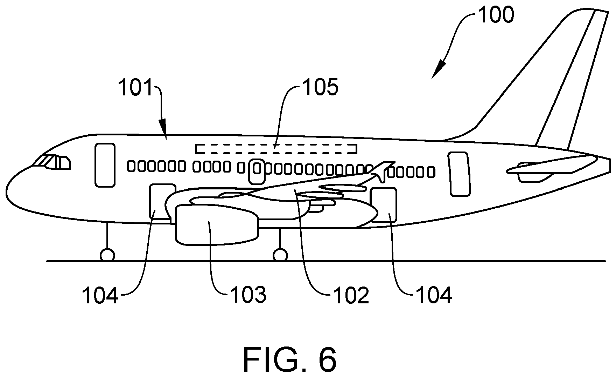

Fig. 6 illustrates a schematic view of an aircraft 100 which can may comprise one or more components or subassemblies comprising one or more joints fabricated by ultrasonic welding using the method or system described herein. The aircraft 100 has a fuselage 101, wings 102, at least one fuel consuming device 103, for example, an engine and at least one fuel storage tank 104. The fuel may be hydrogen und and tank 104 a cryogenic storage tank. In some embodiments, one or both of the components 13, 14 may be a stiffening or strengthening component such as a stringer 105, shell or clip, and the other component the skin 106.

The invention provides a consolidation device for weld line consolidation during ultrasonic welding of, but not exclusively, CFRP parts. It utilizes air pressure and an air cushion to exert a force / pressure onto a surface. In an embodiment, the consolidator has a rigid base or mount which serves as a point for attachment and a flexible, e.g. elastic, skirt with an opening facing downward onto the weld line. The volume which is enclosed between the rigid top structure, the skirt and the parts surface is pressurized by the inflow of gas, e.g. pressurized air. The pressure within the cavity consolidates the weld line. This allows conformal consolidation of complex / non-planar surfaces, such as curved surfaces and ramps/joggles. Furthermore, air currents which will occur due to leakages between the skirt and the parts surface will add a cooling effect for the weld line, extracting heat from the previous welding process. Due to the air cushion and the air currents between skirt and part surface, the friction between consolidator and part may be significantly reduced, possibly allowing for cheaper, less rigid positioning systems, e.g. industrial robots.

The invention provides but is not limited to two consolidator-sonotrode configurations. In a first configuration, the consolidator follows the sonotrode. In a second configuration, the consolidator surrounds the sonotrode and either provides a feed through for the sonotrode with a small airgap to decouple the sonotrode from the consolidator, so as to avoid consolidation forces onto the sonotrode, or is directly mounted to the sonotrode assembly in a non-exited spot of the sonotrodes standing wave in order to avoid energy transfer from the sonotrode into the consolidator body. If the assembly has rotational symmetry the positioning system can be less complex as it does not have to provide rotation along the sonotrodes axis. Also, this second configuration may replace the need for a roller which is in advance of the sonotrode in order to pre-compressing the weld area and the energy director.

### List of reference signs:

1 comparison system
10 system for ultrasonic welding
10' system for ultrasonic welding
10" system for ultrasonic welding
11 sonotrode
12 joint region
13 first part
14 second part
15 consolidator
16 surface
17 surface
18 molten region
19 welding direction
20 molten material
21 welded joint
22 mount
23 flexible membrane
24 cavity
25 opening
26 peripheral portion of membrane
27 opening
28 source of pressurised gas
29 arrow
30 driving means
31 roller
32 energy director
34 tip of sonotrode
35 first portion of consolidator
36 second portion of consolidator
37 arrow
40 inclined ramp
41 lower plateau
42 upper plateau
50 cryogenic tank
51 fibre reinforced thermoplastic layer
52 end piece
53 body
54 opening
60 stringer
61 skin panel
62 joggle
100 aircraft
101 fuselage
102 wing
103 fuel consuming device
104 fuel storage tank
105 stringer

## Claims

1. A system (10, 10', 10") for ultrasonic welding, the system comprising:
a sonotrode (11) for emitting ultrasonic energy into a joint region (12) between a first part (13) and a second part (14) that are to be joined together;
a consolidator (15) which exerts pressure on a surface (16; 17) of one of the first and second parts (13; 14) to consolidate the joint region (12), wherein the consolidator (15) is conformable to the surface (16; 17) of the one of the first and second parts (13; 14) to consolidate the joint region (12).

2. The system (10, 10', 10") according to claim 1, wherein the system (10, 10', 10") comprises a source (28) of gas and the consolidator (15) directs a gas stream to the surface (16; 17) of one of the first and second parts (13; 14) to consolidate the joint region (12).

3. The system (10, 10', 10") according to claim 1, wherein the system (10, 10', 10"), wherein the consolidator (15) comprises a bundle of pins that are movable relative to one another and which are brought into contact with and exert pressure on the surface (16; 17) of one of the first and second parts (13; 14) to consolidate the joint region (12).

4. The system (10, 10', 10") according to claim 1, wherein the system (10, 10', 10") comprises a source (28) of gas and the consolidator (15) comprises a mount (22) and a flexible membrane (23) connected to the mount (22) and laterally surrounding a cavity (24), wherein the flexible membrane (23) has an open lower side (25) that faces towards the surface (16; 17) of the one of the first and second parts (13; 14), wherein the mount (22) comprises an inlet (27) for directing the gas into the cavity (24) and the flexible membrane (23) directs the gas to form a gas cushion between the consolidator (15) and the surface (16; 17) of one of the first and second parts (13; 14) to consolidate the joint region (12).

5. The system (10") according to claim 4, wherein the sonotrode (11) is surrounded by and mechanically decoupled from the mount (22) and the flexible membrane (23) laterally surrounds the sonotrode (11) so that the sonotrode (11) is located in the cavity (24).

6. The system (10, 10', 10") according to any one of claims 1 to 5, further comprising a driving system (30) for driving the sonotrode (11) and the consolidator (15) over the surface (16; 17) in a welding direction (19), wherein the consolidator (15) is positioned downstream of the sonotrode (11), or the consolidator (15) is located upstream and downstream of the sonotrode (11).

7. The system (10, 10', 10") according to any one of claims 1 to 6, further comprising a roller (31) that is located upstream of the sonotrode (11), wherein the roller (31) is configured to exert pressure on the surface (16; 17) of the one of the first and second parts (13; 14) to precompress the joint region (12).

8. A method of ultrasonic welding, the method comprising:
forming an assembly to be ultrasonically welded by arranging a first part (13) on a second part (14) and forming a joint region (12) therebetween;
emitting ultrasonic energy into the joint region (12) between the first part (13) and the second part (14) and forming a molten region (18) at the joint region (12);
bringing a consolidator (15) into proximity to a surface (16; 17) of the assembly and exerting pressure on and consolidating the joint region (12), wherein the consolidator (15) is conformable to the surface profile of the one of the first and second parts (13; 14) to consolidate the joint region (12).

9. The method of ultrasonic welding according to claim 8, wherein the surface profile of the one of the first and second parts (13; 14) is non-planar.

10. The method of ultrasonic welding according to claim 8 or claim 9, wherein the ultrasonic energy is supplied by a sonotrode (11) and the method comprises driving the sonotrode (11) and the consolidator (15) over the assembly in a welding direction (19) to continuously form a welded joint, wherein the consolidator (15) is located downstream of the sonotrode (11), or upstream and downstream of the sonotrode (11).

11. The method of ultrasonic welding according to any one of claims 8 to 10,
wherein the consolidator (15) is coupled to a source (28) of gas and directs agas stream at the surface (16; 17) of the assembly, exerting pressure on and consolidating the joint region (12), or
wherein the consolidator (15) comprises a bundle of pins that are movable relative to one another and the pins are brought into contact with and exert pressure on the surface (16; 17) of one of the first and second parts (13; 14) to consolidate the joint region (12).

12. The method according to any one of claims 8 to 10, wherein the consolidator (15) is coupled to a source (28) of gas and the consolidator (15) comprises a mount (22) and a flexible membrane (23) that is connected to the mount (22) and laterally surrounds a cavity (24) , wherein the flexible membrane (23) has an open lower side (25) that faces towards the surface (16; 17) of the one of the first and second parts (13; 14), wherein the mount (22) comprises an inlet (27) for directing the source of gas into the cavity (24), wherein the consolidator (15) is brought into proximity with the surface (16, 17) of the assembly and gas is directed into the cavity (24) to form a high-pressure gas zone between the consolidator and the surface (16, 17) of the assembly that exerts the pressure on the surface (16; 17) of the assembly to consolidate the joint region (12).

13. The method of any one of claims 8 to 12, further comprising bringing a roller (31) that is located upstream of the sonotrode (11) into contact with the surface (16; 17) of assembly to exert pressure on and to precompress the joint region (12).

14. The method of any one of claims 8 to 13, wherein the first part (13) and/or the second part (14) comprise a fibre-reinforced thermoplastic composite.

15. The method of any one of claims 8 to 14, wherein the first part (13) is a skin (60) of an aircraft (100) and the second part (14) comprises one of the group consisting of a stringer (105), an omega stringer, a joggled stringer, and a cryogenic tank (50) of an aircraft or
wherein the second part (14) is a skin (6) of an aircraft (100) and the first part (13) comprises one of the group consisting of a stringer (105), an omega stringer, a joggled stringer, and a cryogenic tank (105) of an aircraft.
